(19) **Europäisches Patentamt / European Patent Office / Office européen des brevets**

(11) **EP 4 062 760 A1**

(12) **DEMANDE DE BREVET EUROPEEN**

(43) Date de publication:
**28.09.2022 Bulletin 2022/39**

(21) Numéro de dépôt: **22172210.1**

(22) Date de dépôt: **21.12.2018**

(51) Classification Internationale des Brevets (IPC):
**A01N 25/02** (2006.01)    **A01N 25/30** (2006.01)
**A01N 37/02** (2006.01)    **A01N 37/36** (2006.01)
**A01N 37/40** (2006.01)    **A01P 1/00** (2006.01)

(52) Classification Coopérative des Brevets (CPC):
**A01N 37/40; A01N 25/02; A01N 25/30;**
**A01N 37/02; A01N 37/36**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2017 FR 1763193**

(62) Numéro(s) de document de la (des) demande(s)
initiale(s) en application de l'article 76 CBE:
**18215312.2 / 3 501 281**

(71) Demandeur: **Theseo**
**53000 Laval (FR)**

(72) Inventeurs:
• **MERIADEC, Elodie**
**53000 Laval (FR)**
• **VANNEVILLE, Ludovic**
**53000 LAVAL (FR)**

(74) Mandataire: **LLR**
**11 boulevard de Sébastopol**
**75001 Paris (FR)**

(54) **COMPOSITION DÉSINFECTANTE**

(57)    L'invention concerne une composition comprenant de l'acide formique et un surfactant de formule $H_3C-(CH_2)_m-CH(SO_3H)-(CH_2)_n-CH_3$, ou un de ses sels.

**EP 4 062 760 A1**

**Description**

L'invention concerne une composition désinfectante, notamment pour la désinfection des bâtiments d'élevage.

La biosécurité désigne l'ensemble des mesures visant à réduire le risque d'introduction et de propagation d'organismes pathogènes au sein des élevages. Il s'agit de développer des mesures pour éviter l'entrée de nouveaux agents pathogènes dans un élevage, empêcher leur transfert interne entre les différentes zones de l'exploitation et ainsi limiter le recours aux antibiotiques. La biosécurité est un enjeu majeur dans la gestion de la santé des élevages :

- Réduction du risque de maladies des animaux ;
- Meilleures performances zootechniques de l'élevage ;
- Sécurité du consommateur.

Le nettoyage et la désinfection des surfaces qui ont été en contact avec des animaux ou des matières organiques constituent un volet essentiel de la lutte contre les maladies microbiennes permettant d'assurer la salubrité des bâtiments et l'innocuité des aliments.

La désinfection est l'opération qui consiste à détruire les microorganismes pathogènes à l'aide de systèmes chimiques ou d'agents physiques.

En santé animale, les désinfectants allient, dans une composition complexe, des substances actives biocides, des tensioactifs, des solvants et autres adjuvants destinés à favoriser l'action des ingrédients actifs.

Ces désinfectants sont des produits chimiques biocides, assez puissants, que l'on applique dilués sur les surfaces contaminées ou purs dans le cas des traitements par voie aérienne.

Différents critères doivent être considérés et évalués afin d'obtenir des désinfectants stables et efficients :

- Le spectre d'activité ;
- L'efficacité et la possibilité d'emploi dans le contexte de l'exploitation (manipulation simple, risque faible de corrosion de l'équipement, stable selon la température) ;
- La sécurité : pour le personnel, les animaux et l'environnement.

En parallèle, la substitution de substances largement utilisées, comme l'ammonium quaternaire, perturbateur endocrinien notable et le glutaraldéhyde, reconnu comme toxique pour l'Homme et très toxique pour l'environnement, constitue un verrou majeur à lever.

Pour assurer une efficacité microbiologique optimale, le désinfectant doit rester suffisamment longtemps en présence pour pénétrer en concentrations suffisantes les salissures et les microorganismes.

Ce temps de contact est nettement amélioré lorsque le produit est moussant, car la mousse adhère aux parois verticales, ralenti l'écoulement et augmente le temps d'activité du désinfectant sur les microorganismes.

Parmi les désinfectants utilisés, on peut citer ceux à base d'acide formique notamment décrits dans le brevet EP 2 002 720. Toutefois, de tels désinfectants ne sont pas optimums et devraient être améliorés pour augmenter l'efficacité de la décontamination des parois verticales.

On connaît également la composition développée par Menno Chemie-Vertrieb GmbH Venno Vet 1, qui est utilisée sous forme de mousse pour appliquer de l'acide formique sur les surfaces de bâtiments d'élevages (« Venno vet 1 is a desinfectant for all kind of animal houses for the responsible user » 2003, Menno Chemie-Vertrieb GmbH, pages 1-4 » et «Menno Hygienmanagement, 2015, Menno Chemie-Vertieb GmbH, pages 1-8 »). Cette composition comprend toutefois une forte quantité d'acide formique (55%) qui peut être néfaste pour l'environnement (Yilmaz et al., Deutsche Tierärztliche Wochenschrift 116, Heft 5 (2009), pages 180-185).

L'invention a donc pour but de remédier à ces inconvénients.

Un des buts de l'invention est de résoudre les problèmes susmentionnés, en présentant un désinfectant liquide, exempt de glutaraldéhyde et d'ammonium quaternaire, diluable à 1% ou 2% selon l'activité souhaitée.

Un des buts de l'invention est donc de fournir une composition décontaminante qui est adaptée aux parois verticales.

Un autre but de l'invention est de fournir une méthode simple pour fabriquer un tel décontaminant.

L'invention concerne en effet une composition comprenant : de 30 à 85 % en masse d'un premier acide faible, i.e. de l'acide formique, notamment de l'acide formique à 75%, 85% ou 99%, par rapport à la masse totale de la composition, et de 9 à 25 % en masse par rapport à la masse totale de la composition d'un premier surfactant, l'acide sec C14-17- alkyl sulfonique, de formule $H_3C-(CH_2)_m-CH(SO_3H)-(CH_2)_n-CH_3$, ou un de ses sels, où m+n varie de 11 à 14 et où la valeur moyenne de m+n est de 15 +/- 0,5.

L'invention repose sur la constatation surprenante faite par les inventeurs que le mélange de l'acide formique avec un surfactant très particulier augmente le pouvoir moussant de la composition la rendant ainsi plus efficace pour la décontamination des parois verticales, notamment les parois verticales des bâtiments d'élevage.

Dans la composition selon l'invention, l'agent décontaminant i.e. l'acide formique, dont la quantité, en masse, peut varier de 30 à 85% par rapport à la masse totale de la composition. Cela signifie que la quantité d'acide formique peut prendre les valeurs suivantes : 30 %, 31 %, 32 %, 33 %, 34 %, 35 %, 36 %, 37 %, 38 %, 39 %, 40 %,41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 % et 85 %.

L'acide formique utilisé dans la composition selon l'invention peut être de l'acide formique à 75%, 85% ou 99% ce qui signifie que respectivement 75%, 85% ou 99% (m/m) de la fraction d'acide formique correspond effectivement à de l'acide, le reste correspondant à de l'eau, un solvant et/ou des impuretés.

L'homme du métier saura se fournir en acide formique à 75%, 85% ou 99% auprès des fournisseurs de produits chimiques habituels.

Afin d'augmenter l'effet de l'acide formique, celui-ci est combiné dans la composition selon l'invention à un premier surfactant : l'acide sec C14-17- alkyl sulfonique de formule $H_3C-(CH_2)_m-CH(SO_3H)-(CH_2)_n-CH_3$, ou un de ses sels notamment des sels de sodium ou de potassium, où m+n varie de 11 à 14 et où la valeur moyenne du nombre de carbone est de 15 +/- 0,5.

De la formule générale, on comprend que la molécule susmentionnée comprend un mélange de composés où n et m varient de sorte que la somme n+m varie de 11 à 14, c'est-à-dire que la molécule comporte de 14 à 17 atomes de carbone.

Cela signifie que les composés formant le premier surfactant peuvent être les suivants :

Si m+n = 11

| n | m | n+m |
|---|---|-----|
| 0 | 11 | 11 |
| 1 | 10 | 11 |
| 2 | 9 | 11 |
| 3 | 8 | 11 |
| 4 | 7 | 11 |
| 5 | 6 | 11 |
| 6 | 5 | 11 |
| 7 | 4 | 11 |
| 8 | 3 | 11 |
| 9 | 2 | 11 |
| 10 | 1 | 11 |
| 11 | 0 | 11 |

Si m+n = 12

| n | m | n+m |
|---|---|-----|
| 0 | 12 | 12 |

| n | m | n+m |
|---|---|-----|
| 1 | 11 | 12 |
| 2 | 10 | 12 |

(suite)

| n | m | n+m |
|---|---|---|
| 3 | 9 | 12 |
| 4 | 8 | 12 |
| 5 | 7 | 12 |
| 6 | 6 | 12 |
| 7 | 5 | 12 |
| 8 | 4 | 12 |
| 9 | 3 | 12 |
| 10 | 2 | 12 |
| 11 | 1 | 12 |
| 12 | 0 | 12 |

## Si m+n = 13

| n | m | n+m |
|---|---|---|
| 0 | 13 | 13 |
| 1 | 12 | 13 |
| 2 | 11 | 13 |
| 3 | 10 | 13 |
| 4 | 9 | 13 |
| 5 | 8 | 13 |
| 6 | 7 | 13 |
| 7 | 6 | 13 |
| 8 | 5 | 13 |
| 9 | 4 | 13 |
| 10 | 3 | 13 |
| 11 | 2 | 13 |
| 12 | 1 | 13 |
| 13 | 0 | 13 |

## Si m+n = 14

| n | m | n+m |
|---|---|---|
| 0 | 14 | 14 |
| 1 | 13 | 14 |
| 2 | 12 | 14 |
| 3 | 11 | 14 |
| 4 | 10 | 14 |

(suite)

| n | m | n+m |
|---|---|-----|
| 5 | 9 | 14 |
| 6 | 8 | 14 |
| 7 | 7 | 14 |
| 8 | 6 | 14 |
| 9 | 5 | 14 |
| 10 | 4 | 14 |
| 11 | 3 | 14 |
| 12 | 2 | 14 |
| 13 | 1 | 14 |
| 14 | 0 | 14 |

Le premier surfactant est également défini en ce que la moyenne du nombre de carbone est de 15 +/- 0,5. Cela signifie qu'en moyenne dans le mélange de premier surfactant, les composés majoritaires ont majoritairement 15 atomes de carbone, mais que peuvent exister des composés à 14, 16 ou 17 carbones dans des proportions moindres.

L'homme du métier saura se fournir en acide sec C14-17- alkyl sulfonique auprès des fournisseurs de produits chimiques habituels.

Dans la composition selon l'invention, le premier surfactant représente de 9 à 25 % en masse, ce qui signifie qu'il représente 9%, 9,1%, 9,2%, 9,3%, 9,4%, 9,5%, 9,6%, 9,7%, 9,8%, 9,9% 10%, 10,1%, 10,2%, 10,3%, 10,4%, 10,5%, 10,6%, 10,7%, 10,8%, 10,9%, 11%, 12%, 13%, 14%, 15%, 16%, 17%, 18%, 19%, 20%, 21%, 22%, 23%, 24% et 25% en masse par rapport à la masse totale de la composition.

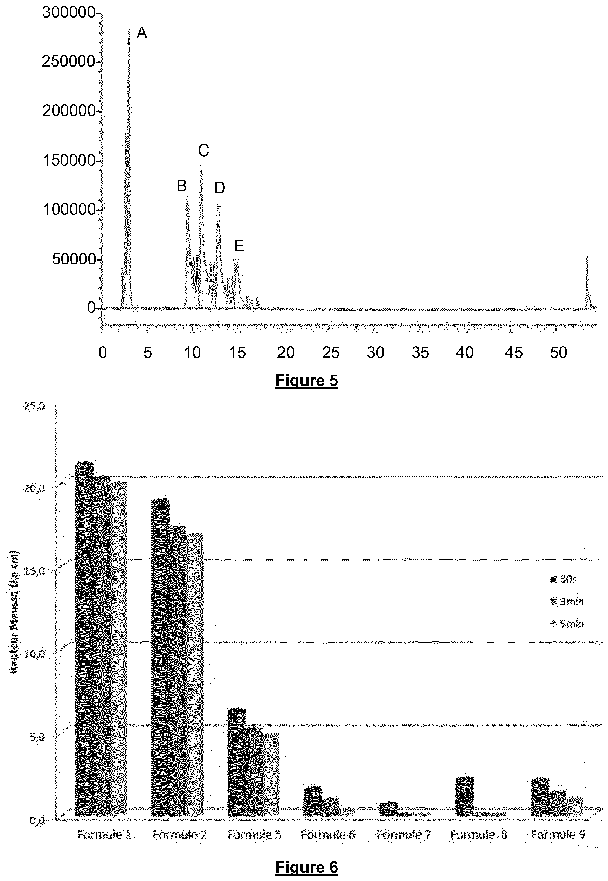

De manière avantageuse, le premier surfactant utilisé dans le cadre de l'invention présente un profil HPLC tel que montré à la figure 5, selon les conditions expérimentales décrites dans l'exemple 7.

Avantageusement, l'invention concerne une composition telle que définie précédemment, comprenant en outre de 5 à 30 % en masse, par rapport à la masse totale de la composition, d'un second acide faible, notamment de l'acide glyoxylique, de l'acide acétique, de l'acide propionique, de l'acide citrique, de l'acide lactique, de l'acide chloroéthanoïque, de l'acide malonique, et de l'acide malique. Ce second acide représente en masse, par rapport à la masse de la composition de 5 à 30 % ce qui signifie qu'il peut représenter 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29% ou 30% en masse. [Ce second acide sera d'agent acidificateur de la composition selon l'invention. Cela a pour avantage de permettre de maintenir l'acide formique dans un milieu acide où il aura son efficacité optimale].

De manière plus avantageuse, l'invention concerne une composition telle que définie ci-dessus, comprenant en outre de 5 à 15% en masse, par rapport à la masse totale de la composition, d'un second surfactant.

Le second surfactant utilisé dans la composition a pour but, lors de l'utilisation, d'augmenter la production de mousse. Il représente en masse par rapport à la masse totale de la composition 5%, 6%, 7%, 8%, 9%, 10%, 11%, 12%, 13%, 14% ou 15%. Des surfactants avantageux utilisés comme seconds surfactants selon l'invention sont par exemple des acides en C10-C14 alkylbenzène sulfoniques ou leurs sels, tels que l'acide dodécylbenzène sulfonique, ou ses sels de sodium. Des surfactants anioniques pouvant être utilisés sont par exemple les sulfates, sulfonates, phosphates ou phosphonates d'alcool, sulfates ou sulfonates d'alkyles, les sulfates ou sulfonates d'akylaryles, les sels métalliques alcalins d'acides gras, les sels d'ammonium d'acides gras, les amines sulfonatées, les sarcosinates gras, les sulfinates d'alkyles linéaires, les éthers sulfates d'alcool, les sulfonates d'alcanes secondaires ou l'un quelconque des mélanges de ceux-ci.

Avantageusement, l'invention concerne une composition telle que définie ci-dessus, dans laquelle ledit second surfactant est de l'acide dodécylbenzènesulfonique, ou le dodécylbenzènesulfonate de sodium.

De manière encore plus avantageuse, l'invention concerne une composition telle que définie ci-dessus, comprenant :

plus de 48 % en masse d'acide formique
de 9 à 12 % en masse du premier surfactant,
de 10 à 15 % en masse d'un second surfactant, et
de 5 à 15% d'un second acide faible tel que défini ci-dessus,
les pourcentages étant exprimés par rapport à la masse totale de la composition.

Notamment, l'invention concerne une composition comprenant

a. plus de 48 % en masse d'acide formique
b. de 9 à 12 % en masse du premier surfactant,
c. de 10 à 15 % en masse d'acide dodécylbenzènesulfonique ou de dodécylbenzènesulfonate de sodium, et
d. de 5 à 15% en masse d'acide glyoxylique,

les pourcentages étant exprimés par rapport à la masse totale de la composition.

Il est encore plus avantageux que la composition selon l'invention, telle que définie ci-dessus, comprenne :

e. de 48 % à 71% en masse d'acide formique,
f. de 9 à 12 % en masse du premier surfactant,
g. de 10 à 15 % en masse d'acide dodécylbenzènesulfonique ou de dodécylbenzènesulfonate de sodium, et
h. de 5 à 15% en masse d'acide glyoxylique,

les pourcentages étant exprimés par rapport à la masse totale de la composition.

L'invention concerne en outre un procédé ou une méthode de préparation d'une composition telle que définie ci-dessus, comprenant une étape de mélange d'acide formique avec au moins un premier surfactant, le premier surfactant étant l'acide sec C14-17- alkyl sulfonique, de formule $H_3C\text{-}(CH_2)_m\text{-}CH(SO_3H)\text{-}(CH_2)_n\text{-}CH_3$, ou un de ses sels, où m+n varie de 11 à 14 et où la valeur moyenne de m+n est de 15 +/- 0,5, c'est-à-dire où m+n varie de 11 à 14 et où la valeur moyenne du nombre de carbone est de 15 +/- 0,5,.

Le procédé utilisé pour fabriquer la composition selon l'invention est détaillé dans les exemples ci-après.

L'invention concerne en outre une composition moussante comprenant de 0,1 à 5 % en masse, par rapport à la masse totale de la composition moussante, d'une composition comprenant :

a- de 30 à 85 % en masse d'acide formique, par rapport à la masse totale de la composition, et
b- de 9 à 25 % en masse par rapport à la masse totale de la composition d'un mélange d'un premier surfactant, l'acide sec C14-17- alkyl sulfonique, de formule $H_3C\text{-}(CH_2)_m\text{-}CH(SO_3H)\text{-}(CH_2)_n\text{-}CH_3$, ou un de ses sels, où m+n varie de 11 à 14 et où la valeur moyenne de m+n est de 15 +/- 0,5, c'est-à-dire où m+n varie de 11 à 14 et où la valeur moyenne du nombre de carbone est de 15 +/- 0,5" et
c- de 5 à 15% en masse, par rapport à la masse totale de la composition, d'un second surfactant.

Les inventeurs montrent que la composition moussante susmentionnée, qui comprend de 0,1 à 5 % en masse par rapport à la masse totale de la composition moussante, est appropriée pour une utilisation dans le cadre de la décontamination des surfaces. Cette composition du fait de la présence de l'acide formique a un effet biocide, et a une bonne tenue sur les surfaces du fait de ses propriété moussantes.

Comme indiqué, la composition moussante comprend de 0,1 à 5% de la composition susmentionnée, ce qui signifie qu'elle peut contenir, en masse par rapport à la masse totale de la composition moussante, 0,1%, 0,2%, 0,3%, 0,4%, 0,5%, 0,6%, 0,7%, 0,8%, 0,9%, 1%, 1,1%, 1,2%, 1,3%, 1,4%, 1,5%, 1,6%, 1,7%, 1,8%, 1,9%, 2%, 2,1%, 2,2%, 2,3%, 2,4%, 2,5%, 2,6%, 2,7%, 2,8%, 2,9%, 3%, 3,1%, 3,2%, 3,3%, 3,4%, 3,5%, 3,6%, 3,7%, 3,8%, 3,9%, 4%, 4,1%, 4,2%, 4,3%, 4,4%, 4,5%, 4,6%, 4,7%, 4,8%, 4,9% ou 5% de la composition susmentionnée.

A la dilution de 0,1 à 5%, les inventeurs se sont rendus compte que l'effet antibactérien, comme cela est démontré dans les exemples ci-après, est moins efficace au regard de la norme européenne, si la composition ne comprend pas un second surfactant.

Dans un autre aspect, l'invention concerne l'utilisation d'une composition telle que définie ci-dessus, ou d'une composition moussante susmentionnée, pour la décontamination de surface, notamment la décontamination de surfaces contaminées par des microorganismes.

La composition selon l'invention, ou la composition moussante selon l'invention comprennent de l'acide formique qui est un agent biocide reconnu. Combinée au premier surfactant tel que défini ci-dessus, la composition est capable de rester plus longtemps sur une surface contaminée par des microorganismes, et donc permettre une action particulièrement efficace de l'acide formique.

Avantageusement, l'invention concerne l'utilisation susmentionnée, où ladite surface est une surface verticale, notamment une surface verticale d'un bâtiment, en particulier d'un bâtiment d'élevage.

Du fait de son pouvoir moussant, et de sa très bonne tenue de mousse, la composition selon l'invention est particulièrement adaptée à une utilisation sur des surfaces verticales, notamment des murs de bâtiments et en particulier des bâtiments d'élevage.

En effet, dans le cadre des élevages, la désinfection est l'ensemble des opérations, le nettoyage, le lavage et le passage d'un désinfectant, visant à détruire les micro-organismes présents dans le milieu, et notamment sur les murs.

Une telle décontamination n'est pas aisée car le produit désinfectant coule lorsqu'il est appliqué sur les murs. La mousse de la composition selon l'invention permet de maintenir plus longtemps le contact entre la surface à traiter et le produit biocide, ici l'acide formique, de sorte que l'efficacité de la décontamination est augmentée.

Dans un autre aspect, l'invention concerne une méthode de décontamination de surface verticale, notamment d'un bâtiment d'élevage, comprenant une étape de pulvérisation sous forme de mousse d'une composition moussante telle que définie ci-dessus, ou d'une composition telle que définie ci-dessus.

Pour la pulvérisation de la composition selon l'invention, il suffit d'utiliser un pulvérisateur disponible dans le commerce, notamment un pulvérisateur agricole, notamment utilisé en jardinerie, tel qu'un pulvérisateur à pompe.

L'invention sera mieux comprise à la lumière des exemples ci-après et des figures suivantes :

**Légende des figures**

Les figures **1A à 1D** représentent des photographies de la pulvérisation de produits moussants sur des murs de briques (t0)

La figure 1A représente la pulvérisation du produit TH5.

La figure 1B représente la pulvérisation du produit VV1S.

La figure 1C représente la pulvérisation du produit LD530.

La figure 1D représente la pulvérisation du produit LD535.

Les figures **2A à 2D** représentent des photographies 4 minutes après la pulvérisation de produits moussants sur des murs de briques (t4)

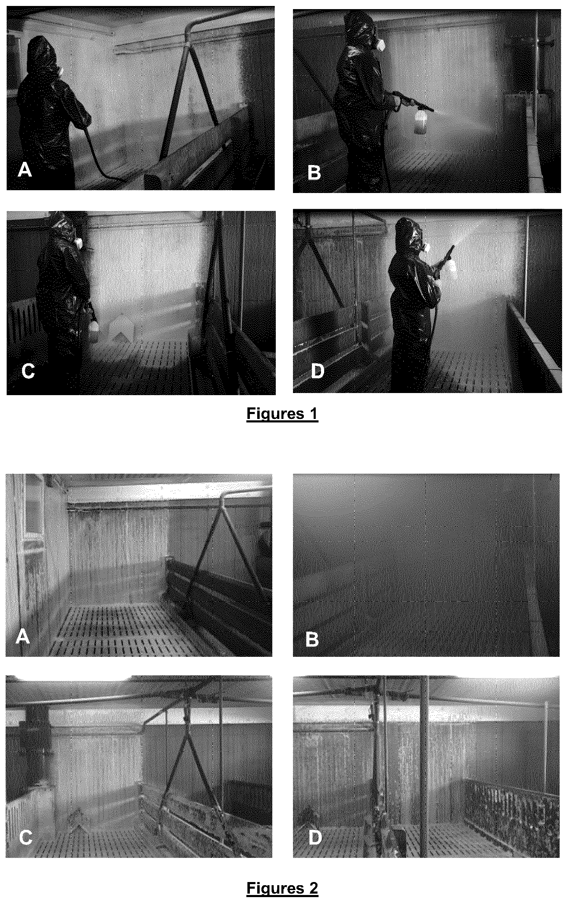

La figure 2A représente la tenue de la mousse pour le produit TH5.

La figure 2B représente la tenue de la mousse pour le produit W1S.

La figure 2C représente la tenue de la mousse pour le produit LD530.

La figure 2D représente la tenue de la mousse pour le produit LD535.

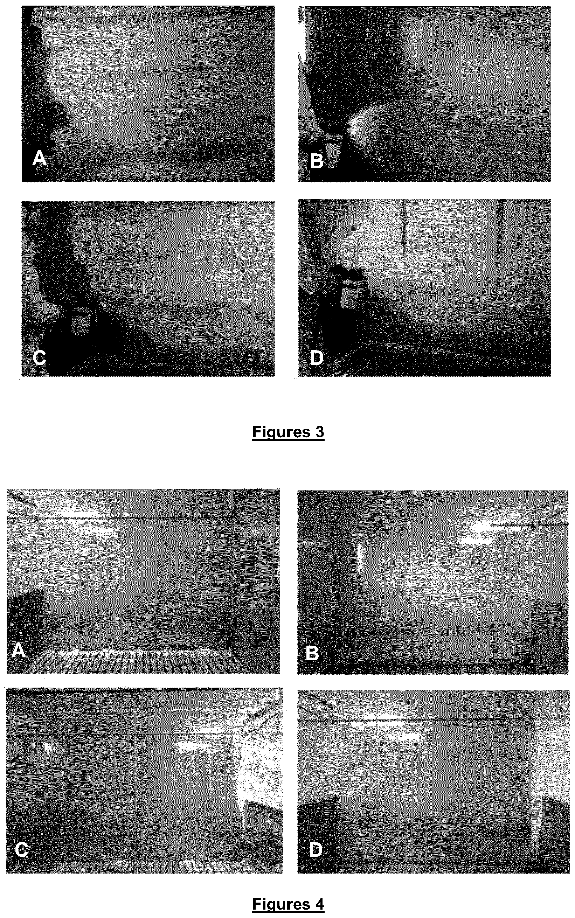

Les figures **3A à 3D** représentent des photographies de la pulvérisation de produits moussants sur des murs de béton (t0)

La figure 3A représente la pulvérisation du produit TH5.

La figure 3B représente la pulvérisation du produit VV1S.

La figure 3C représente la pulvérisation du produit LD530.

La figure 3D représente la pulvérisation du produit LD535.

Les figures **4A à 4D** représentent des photographies 8 minutes après la pulvérisation de produits moussants sur des murs de béton (t8)

La figure 4A représente la tenue de la mousse pour le produit TH5.

La figure 4B représente la tenue de la mousse pour le produit VV1S.

La figure 4C représente la tenue de la mousse pour le produit LD530.

La figure 4D représente la tenue de la mousse pour le produit LD535.

La **figure 5** représente un résultat de chromatographie d'analyse du premier surfactant selon l'invention en $\mu V$ en fonction du temps (en min). A représente les sels, B les composés en C14, C les composés en C15, D les composés en C16 et E les composés en C17.

La **figure 6** représente un graphique montrant la hauteur de mousse en centimètres après 30 secondes (barres gris foncé), 3 minutes (barres gris moyen) ou 5 minutes (barres gris claire), pour les différentes formules testées.

**EXEMPLES**

**Exemple 1 : préparation d'une composition selon l'invention**

Les inventeurs ont préparé une composition selon l'invention de formule suivante :

a. plus de 48 % en masse d'acide formique,

b. de 9 à 12 % en masse du premier surfactant,

c. de 10 à 15 % en masse d'acide dodécylbenzènesulfonique, et

d. de 5 à 15% en masse d'acide glyoxylique,

les pourcentages étant exprimés par rapport à la masse totale de la composition. Les pourcentages sont ramenés à 100% à l'aide d'un liquide aqueux.

Dans l'ordre d'ajout :

1 - On introduit le liquide aqueux, notamment de l'eau dans un réacteur

2 - Ensuite, on ajoute l'acide formique. Pour le manipulateur, il est important de prendre des précautions particulières à cause des vapeurs d'acide formique.

3 - Puis on ajoute au mélange précédent de l'acide glyoxylique. Le mélange de l'acide formique et de l'acide glyoxylique se réalise très bien. Il n'est donc pas nécessaire d'appliquer une forte agitation.

4 - On ajoute de l'acide dodécylbenzènesulfonique. Ce surfactant est visqueux. Grâce à la forte acidité du mélange, le second surfactant se solubilise correctement. En laboratoire, sur une fabrication de 100mL (agitation 400 rpm), il faut 5 à 10 minutes pour solubiliser le second surfactant dans le mélange acide formique, acide glyoxylique.

5 - On ajoute le premier surfactant qui est sous forme poudre donc il faut prévoir un temps d'agitation suffisant pour le solubiliser.

La composition est alors prête.

Pour réaliser la composition moussante selon l'invention, comprenant de 0,1 à 5% en masse de composition selon l'invention, ladite composition est diluée dans 95 à 99,9% en masse d'un liquide aqueux, notamment de l'eau.

**Exemple 2 : effet antibactérien de la composition selon l'invention**

La composition selon l'invention a été utilisée à une dilution de 0,25, 0,5 et 1% dans l'eau, et son efficacité antibactérienne a été mesurée selon la norme européenne NF EN 14349 (décembre 2012).

Quatre souches bactériennes ont été testées :

- *Pseudomonas aeruginosa* DSM 339,
- *Proteus vulgaris* DSM 30118,
- *Staphylococcus aureus* DSM 799, et
- *Enterococcus hirae* DSM 3320.

La composition selon l'invention est bactéricide sur toutes les souches testées à une concentration de 1%, à 10°C, selon la méthodologie de la norme européenne NF EN 14349 (décembre 2012).

**Exemple 3 : effet antifongique de la composition selon l'invention**

La composition selon l'invention a été utilisée à une dilution de 1, 2 et 3%, et son efficacité antifongique a été mesurée selon la norme européenne NF EN 16438 (mars 2014).

Deux souches ont été testées :

- *Candida albicans* DSM 1386, et
- *Aspergillus brasiliensis* DSM 1988.

La composition selon l'invention est antifongique à une concentration de 2%, pour toutes les souches fongiques étudiées, à 10°C, selon la méthodologie de la norme européenne NF EN 16438 (mars 2014).

**Exemple 4 : effet antiviral de la composition selon l'invention**

La composition selon l'invention a été utilisée à une dilution de 1% dans l'eau et son efficacité antivirale a été mesurée selon la norme européenne NF EN 14675 (mai 2015).

Une souche de virus a été testée : Entérovirus bovin de type 1 (ECBO) ATCC VR-248. L'entérovirus a été cultivé en cellules MDCK à une température de 37°C avec 5% de $CO_2$.

La composition selon l'invention est antivirale à une concentration de 1%, à 10°C, selon la méthodologie de la norme européenne NF EN 14675 (mai 2015).

**Exemple 5 : propriétés biocides de la composition selon l'invention déformulée**

Afin de tester l'effet des différents composants de la composition moussante selon l'invention, les inventeurs ont testé ses propriétés biocides sur la souche bactérienne *Enterococcus hirae* DSM 3320 et l'ont comparé à d'autres sous formules de ladite composition, selon le protocole décrit à l'exemple 2.

Les formulations utilisées sont les suivantes :

| Formulation | Test 0 | Test 1 | Test 2 | Test 3 | Test 4 | Test 5 | Test 6 |
|---|---|---|---|---|---|---|---|
| Eau | 4,0 % | 42,5 % | 32,0% | 17,5 % | 18,5 % | 29,0 % | 14,5 % |
| Ac. formique | 57,5 % | 57,5 % | 57,5 % | 57,5 % | 57,5 % | 57,5 % | 57,5 % |
| Surfactant 1 | 10,5% | | 10,5% | 10,5% | 10,5% | | |
| Surfactant 2 | 13,5% | | | | 13,5% | 13,5% | 13,5% |
| Ac. glyo. | 14 ,5% | | | 14 ,5% | | | 14 ,5% |
| Essai 1 dilution 1%, 10°C, 120 min | Log R > **5,41** | Log R > 2,04 | Log R > **5,41** | Log R > **5,41** | Log R > **5,41** | Log R > **5,41** | Log R > **5,41** |
| Essai 2 dilution 0,5%, 10°C, 120 min | Log R > **5,41** | Log R > 2,04 | Log R > 2,04 | Log R > 2,04 | Log R = **4,97** | Log R > 2,04 | Log R > 2,04 |

Ac. formique : acide formique ; Ac. glyo : acide glyoxylique.

Des résultats ci-dessus, on constate que la composition sans surfactant (Test 1) n'a pas d'effet biocide, quelle que soit la dilution. On constate en outre qu'à la dilution de 0,5% la composition conserve une activité biocide seulement si elle comprend les deux surfactants (Test 0 et Test 4).

Aussi, à la dilution de 0,5%, une véritable synergie entre les deux surfactants pour permettre l'effet biocide est identifiable.

**Exemple 6 : propriétés moussantes**

Afin de tester *in situ* l'effet de la composition selon l'invention, 4 produits ont été testés sur 2 surfaces différentes (brique et béton) :

- TH5, produit de la gamme Theseo, connu pour mousser et adhérer correctement, et satisfaisant les éleveurs
- VV1S, produit concurrent, ayant une formule sensiblement équivalente à la composition selon l'invention
- LD530 - composition selon l'invention
- LD535 - composition comprenant de l'acide formique mais pas les mêmes surfactants que ceux de l'invention.

Pour mesurer la tenue de la mousse, le protocole utilisé est le suivant :

1 - On applique par pulvérisation, autant que possible de manière comparable, les produits sur des surfaces similaires (briques ou béton). Un simple pulvérisateur, disponible dans le commerce, notamment en jardinerie, peut être utilisé.
2 - On compare visuellement l'aspect de la mousse pendant l'application : certains produits ont une mousse très dense, qui adhère bien et qui couvre bien la surface, d'autres ont plutôt une mousse liquide qui coule rapidement.
3 - On compare ensuite, toujours visuellement, la tenue dans le temps en prenant des photos à intervalles réguliers. Il est très facile de distinguer les mousses qui adhèrent bien de celles qui ne tiennent pas longtemps sur les surfaces.

**6.1 : test sur briques (Saint Ouen des Vallons (53)) - France.**

Les produits TH5, LD530, LD535 et VV1S ont été pulvérisés sur des murs de briques d'un élevage et les photos ont été prises lors de la pulvérisation (t0). Les résultats sont présentés aux Figures 1A à 1D.

Le produit 530 a une mousse particulièrement dense qui ressemble à une mousse à raser, et qui semble ne pas couler du tout à l'application. Le TH5 et le produit 535 ont une mousse similaire. Le VV1S a une mousse qui coule dès l'application, et un fort brouillard se forme immédiatement.

Quatre minutes après la pulvérisation, de nouvelles photos sont prises pour déterminer la tenue de la mouse.

Les résultats sont présentés aux Figures 2A à 2D.

Le produit 530 a une mousse particulièrement dense qui adhère vraiment bien à la brique. Le TH5 et le produit 535 ont une mousse similaire, mais le TH5 a une adhérence légèrement meilleure. Le VV1S a une mousse qui coule dès l'application, donc il n'y a plus de mousse après 4 minutes.

L'ensemble de ces résultats montre que la composition selon l'invention possède une bonne tenue de mousse et que son application est particulièrement adaptée à une décontamination des surfaces verticales.

### 6.2 : test sur béton (Soucé (53)) - France.

Les produits TH5, LD530, LD535 et VV1S ont été pulvérisés sur des murs de briques d'un élevage et les photos ont été prises lors de la pulvérisation (t0).

Les résultats de l'application à t0 sont visibles sur la figure 3.

Le produit TH5 a une mousse particulièrement dense qui ressemble à une mousse à raser, et qui ne coule quasiment pas au moment de l'application. Les produits 530 et le produit 535 ont une mousse similaire, qui coule un peu à l'application. Le VV1S a une mousse qui coule dès l'application. Pas de brouillard comme dans l'essai précédent.

Par rapport à l'essai précédent, la même classification des produits les uns par rapport aux autres est obtenue.

Huit minutes après la pulvérisation, de nouvelles photos sont prises pour déterminer la tenue de la mouse. Les résultats sont visibles sur les figures 4.

Le produit 530 a une mousse qui se démarque vraiment des 3 autres produits en tenant plus longtemps. Le TH5 et le produit 535 ont une mousse similaire à l'application, mais la tenue de mousse du produit 535 est moins bonne que celle du TH5.

Le VV1S a une mousse qui coule dès l'application. La mousse ne tient pas du tout sur les murs.

### Exemple 7 : caractérisation du surfactant l'acide sec C14-17- alkyl sulfonique

Le but de cette étude est dans un premier temps, avoir une méthode d'analyse pour connaitre le profil HPLC du premier surfactant : l'acide sec C14-17- alkyl sulfonique.

Les produits chimiques utilisés sont les suivants :

Acétonitrile (Fisher HPLC Grade)
Tetrahydrofuran (THF) (Sigma HPLC grade)
Acide Trifluroacétique (TFA) (Sigma HPLC grade)
Eau (Fisher HPLC grade).
Les dispositifs d'études sont les suivants :
HPLC systeme Shimadzu LC-20 AD et détecteur ELSD Sedex 90
Programme d'aquisition : labsolution
Pipettes automatiques
Colonne LC : ODS C18 hypersil Thermo 250*4.6 mm 10$\mu$m.

Dans le cadre de l'expérience, les conditions expérimentales sont les suivantes :

Condition HPLC
Colonne : ODS C18 Hypersil Thermon 250*4.6 mm 10$\mu$m
Température du four : 45°C
Volume d'injection : 20$\mu$L
Temps d'analyse : 55 min
Phase mobile : eau / acétonitrile 0.1% TFA.

Le programme de gradient de phase mobile est le suivant :

| Temps | % eau | % acétonitrile |
|---|---|---|
| 0 min | 65 | 35 |
| 0 à 26 min | gradient | |
| 26 min | 10 | 90 |
| 26 à 50 min | 10 | 90 |

(suite)

| Temps | % eau | % acétonitrile |
|---|---|---|
| 50,1 min | 65 | 35 |
| 50,1 à 55 min | 65 | 35 |

Les conditions ELSD sont les suivantes :

Température : 40°C, pression de gaz : 3,5 bars.
Pour l'expérience, 100 mg de chaque échantillon à tester sont placés dans un flacon (« vial headspace ») de 20 mL, et 4 mL d'un mélange eau/THF (20/80) et 0.1% TFA est ajouté. L'échantillon est placé dans un bain à ultra-sons pendant 10 min. La solution est alors injectée selon les conditions susmentionnées.
Les résultats d'un test sont présentés à la figure 5.

La quantification de l'aire sous les courbes est la suivante pour l'échantillon de la figure 5 :

Sels: 24,9%
Acide sulfonique C14 : 24,3%
Acide sulfonique C15 : 27,1%
Acide sulfonique C16 : 16,5%
Acide sulfonique C17 : 7,2%

Dans cet exemple, ramené aux seuls composés carbonés (sels exclus) le premier surfactant comporte en moyenne 15,08 atomes de carbones (soit environ 15,1 atomes de carbone).
Un test sur un autre échantillon a donné les résultats suivants (quantification de l'aire sous les courbes) :

Sels: 24,7%
Acide sulfonique C14 : 20,6%
Acide sulfonique C15 : 25,8%
Acide sulfonique C16 : 19,1%
Acide sulfonique C17 : 9,8%.

Dans cet exemple, ramené aux seuls composés carbonés (sels exclus) le premier surfactant comporte en moyenne 15,23 carbones (soit environ 15,2 atomes de carbone).
Dans ces conditions analytiques, les inventeurs ont été capables de voir un profil chromatographique du premier surfactant (deux échantillons) par HPLC/ELSD. De plus, ils ont pu séparer les 4 constituants principaux à savoir les acides sulfoniques de C14 à C17 et de connaitre leur pourcentage d'aire.
Le temps de rétention du premier surfactant s'étend de 10 à 18 min environ.

**Exemple 8 : propriétés moussantes de la composition selon l'invention**

Le but de cette étude est de tester l'effet moussant de la composition selon l'invention, et de comparer cet effet à différentes compositions comprenant des surfactants de la même famille que l'acide sec C14-17- alkyl sulfonique.Les compositions suivantes ont été testées :

- Formule 1 : composition comprenant 57,5% en masse d'acide formique, 10,5% en masse d'acide sec C14-17- alkyl sulfonique (sel de sodium), de formule $H_3C$-$(CH_2)_m$-$CH(SO_3H)$-$(CH_2)_n$-$CH_3$, ou un de ses sels où m+n varie de 11 à 14 et où la valeur moyenne du nombre de carbone est de 15 +/- 0,5, de 10 à 15 % en masse d'acide dodécylbenzènesulfonique, et de 5 à 15% en masse d'acide glyoxylique,
- Formule 2 : composition comprenant 57,5% en masse d'acide formique et 10,5% en masse d'acide sec C14-17- alkyl sulfonique (sel de sodium), de formule $H_3C$ $H_3C$-$(CH_2)_m$-$CH(SO_3H)$-$(CH_2)_n$-$CH_3$, ou un de ses sels où m+n varie de 11 à 14 et où la valeur moyenne du nombre de carbone est de 15 +/- 0,5,
- Formule 5 : composition comprenant 57,5% en masse d'acide formique et 34,05% en masse de mono-C12-14 alkyl ester d'acide sulfurique (sel de sodium),
- Formule 6 : composition comprenant 57,5% en masse d'acide formique et 9,97% en masse d'acide octanesulfonique (sel de sodium),

- **Formule 7** : composition comprenant 57,5% en masse d'acide formique et 9,97% en masse d'acide nonanesulfonique (sel de sodium),
- **Formule 8** : composition comprenant 57,5% en masse d'acide formique et 9,97% en masse d'acide decanesulfonique (sel de sodium), et
- **Formule 9** : composition comprenant 57,5% en masse d'acide formique et 9,97% en masse d'acide dodecanesulfonique (sel de sodium).

Les proportions de surfactant sont identiques et les pourcentages tiennent compte de la pureté des produits utilisés :

a. Le sec C14-17- alkyl sulfonique (sel de sodium), de formule $H_3C\text{-}(CH_2)_m\text{-}CH(SO_3H)\text{-}(CH_2)_n\text{-}CH_3$, ou un de ses sels où m+n varie de 11 à 14 et où la valeur moyenne du nombre de carbone est de 15 +/- 0,5, est un composé de pureté de 93%,
b. Le mono-C12-14 alkyl ester d'acide sulfurique, est un composé de pureté de 28,7 %,
c. Les acides octa, nona, déca et dodécanesulfonique sont des composés de pureté de 99%

L'effet moussant des différentes compositions a été testé selon la technique Ross Miles Test, à 20°C dans de l'eau à 15°C selon la norme internationale ISO 696 du 1er juillet 1975.

Les résultats obtenus sont présentés à la **figure 6**.

La hauteur de mousse mesurée pour chacune des formules testées, après 30 secondes, 3 min ou 6 min, montre toujours que l'effet moussant le plus important est toujours observé dans les compositions comprenant le surfactant sec C14-17- alkyl sulfonique (sel de sodium) (environ 20 cm de mousse), alors que la mousse est d'une hauteur très limitée. En outre la mousse ne tient pas sur la durée pour les formules 5 à 9.

Ces résultats montrent que la composition selon l'invention, ou la composition moussante selon l'invention permettent d'obtenir une mousse importante et durable, qui adhère plus longtemps sur les surfaces, favorisant ainsi son effet biocide sur les surfaces verticales.

L'invention n'est pas limitée aux modes de réalisation présentés et d'autres modes de réalisation apparaîtront clairement à l'homme du métier.

**Revendications**

1. Composition comprenant :

   a. de 30 à 50 % en masse d'un premier acide faible, par rapport à la masse totale de la composition, ledit premier acide faible étant de l'acide formique, et
   b. de 9 à 25 % en masse par rapport à la masse totale de la composition d'un premier surfactant, l'acide sec C14-17- alkyl sulfonique, de formule $H_3C\text{-}(CH_2)_m\text{-}CH(SO_3H)\text{-}(CH_2)_n\text{-}CH_3$, ou un de ses sels où m+n varie de 11 à 14 et où la valeur moyenne du nombre de carbone est de 15 +/-0,5.

2. Composition selon la revendication 1 comprenant en outre de 5 à 30 % en masse par rapport à la masse totale de la composition d'un second acide faible, notamment de l'acide glyoxylique, de l'acide acétique, de l'acide propionique, de l'acide citrique, de l'acide lactique, de l'acide chloroéthanoïque, de l'acide malonique, et de l'acide malique.

3. Composition selon la revendication 1 ou la revendication 2, comprenant en outre de 5 à 15% en masse, par rapport à la masse totale de la composition, d'un second surfactant.

4. Composition selon la revendication 3, dans laquelle ledit second surfactant est de l'acide dodécylbenzènesulfonique.

5. Composition selon l'une quelconque des revendications 1 à 4, comprenant :

   a. plus de 48% en masse d'acide formique
   b. de 9 à 12 % en masse dudit premier surfactant, ledit premier surfactant étant l'acide sec C14-17- alkyl sulfonique, de formule $H_3C\text{-}(CH_2)_m\text{-}CH(SO_3H)\text{-}(CH_2)_n\text{-}CH_3$, ou un de ses sels, où m+n varie de 11 à 14 et où la valeur moyenne du nombre de carbone est de 15 +/- 0,5,
   c. de 10 à 15 % en masse d'acide dodécylbenzènesulfonique, et
   d. de 5 à 15% en masse d'acide glyoxylique,

les pourcentages étant exprimés par rapport à la masse totale de la composition.

6. Procédé de préparation d'une composition selon l'une quelconque des revendications 1 à 5, comprenant une étape de mélange d'acide formique avec au moins ledit premier surfactant, ledit premier surfactant étant l'acide sec C14-17-alkyl sulfonique, de formule $H_3C\text{-}(CH_2)_m\text{-}CH(SO_3H)\text{-}(CH_2)_n\text{-}CH_3$, ou un de ses sels où m+n varie de 11 à 14 et où la valeur moyenne du nombre de carbone est de 15 +/- 0,5.

7. Composition moussante comprenant de 0,1 à 5 % en masse, par rapport à la masse totale de la composition moussante, d'une composition comprenant

   a. de 30 à 50 % en masse d'acide formique par rapport à la masse totale de la composition, et
   b. de 9 à 25 % en masse par rapport à la masse totale de la composition d'un mélange d'un surfactant, l'acide sec C14-17- alkyl sulfonique, de formule $H_3C\text{-}(CH_2)_m\text{-}CH(SO_3H)\text{-}(CH_2)_n\text{-}CH_3$, ou un de ses sels où m+n varie de 11 à 14 et où la valeur moyenne du nombre de carbone est de 15 +/- 0,5, et
   c. de 5 à 15% en masse, par rapport à la masse totale de la composition, d'un second surfactant.

8. Utilisation d'une composition selon l'une quelconque des revendications 1 à 5, ou d'une composition moussante selon la revendication 7, pour la décontamination de surface verticale d'un bâtiment, notamment la décontamination de surfaces contaminées par des microorganismes.

9. Utilisation selon la revendication 8, où ladite surface est une surface verticale d'un bâtiment, est une surface verticale d'un bâtiment d'élevage.

10. Méthode de décontamination de surface verticale d'un bâtiment d'élevage, comprenant une étape de pulvérisation sous forme de mousse d'une composition moussante telle que définie à la revendication 7, ou d'une composition selon l'une quelconque des revendications 1 à 5.

**Figures 1**

**Figures 2**

**Figures 3**

**Figures 4**

**Figure 5**

**Figure 6**

EP 4 062 760 A1

RAPPORT DE RECHERCHE EUROPEENNE

Numéro de la demande

EP 22 17 2210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 620 655 A (NEVERMANN EUGEN [DE]) 15 avril 1997 (1997-04-15) | 1-10 | INV. A01N25/02 |
| Y | * les revendications; les exemples 1 et 2; colonne 1, lignes 1-44; colonne 2, lignes 37-67, et colonne 3, lignes 1-19 * | 1-10 | A01N25/30 A01N37/02 A01N37/36 A01N37/40 |
| X | DE 43 17 083 A1 (MENNO CHEMIE VERTRIEB GMBH [DE]) 18 août 1994 (1994-08-18) | 1-10 | A01P1/00 |
| Y | * les revendications et les exemples 1 et 2 * | 1-10 | |
| Y,D | EP 2 002 720 A1 (MENNO CHEMIE VERTRIEB GMBH [DE]) 17 décembre 2008 (2008-12-17) * les revendications; l'exemple et les paragraphes 2-4 et 15-17 * | 1-10 | |
| Y | US 2013/309336 A1 (AUBERGER STEPHAN [FR]) 21 novembre 2013 (2013-11-21) * les revendications et les paragraphes 18-20, 31, 44 et 66-69 * | 1-10 | |
| Y | WO 2015/022033 A1 (ECOLAB INC [US]; KLEINE TILLMANN [DE]; KILLEEN JONATHAN SCOTT [DE]; BR) 19 février 2015 (2015-02-19) * les revendications; page 17, les deux derniers paragraphes et page 18, le premier paragraphe * | 1-10 | DOMAINES TECHNIQUES RECHERCHES (IPC) A01N |
| X | Bkp1: "Venno Vet 1 safety data sheet" In: "Menno Chemie Vertrieb GmbH", 30 juin 2014 (2014-06-30), Product code 5054-GHS, XP055939396, pages 1-11, | 1-10 | |
| Y | * page 1, point 1.2; page 2, point 3.2, Mélanges * | 1-10 | |

-/--

Le présent rapport a été établi pour toutes les revendications

| Lieu de la recherche | Date d'achèvement de la recherche | Examinateur |
|---|---|---|
| Munich | 19 août 2022 | Lorenzo Varela, M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...................................................................
& : membre de la même famille, document correspondant

EPO FORM 1503 03.82 (P04C02)

**RAPPORT DE RECHERCHE EUROPEENNE**

Europäisches Patentamt
European Patent Office
Office européen des brevets

Numéro de la demande

EP 22 17 2210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | Salager ET AL: "Mousses. Formation, formulation et propriétés" In: "Mousses. Formation, formulation et propriétés", 1 janvier 2008 (2008-01-01), J 2 200, Editions T.I.pages 1-14,, XP055939429, * 2.2.5 * | 1-10 | |

----

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 19 août 2022 | Lorenzo Varela, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 22 17 2210

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-08-2022

| Document brevet cité au rapport de recherche | | Date de publication | Membre(s) de la famille de brevet(s) | | Date de publication |
|---|---|---|---|---|---|
| US 5620655 | A | 15-04-1997 | CN | 1115960 A | 31-01-1996 |
| | | | EP | 0683628 A1 | 29-11-1995 |
| | | | ES | 2120014 T3 | 16-10-1998 |
| | | | US | 5620655 A | 15-04-1997 |
| | | | WO | 9417661 A1 | 18-08-1994 |
| DE 4317083 | A1 | 18-08-1994 | AUCUN | | |
| EP 2002720 | A1 | 17-12-2008 | AUCUN | | |
| US 2013309336 | A1 | 21-11-2013 | CA | 2823904 A1 | 30-08-2012 |
| | | | CN | 103379825 A | 30-10-2013 |
| | | | CY | 1119344 T1 | 14-02-2018 |
| | | | DK | 2677867 T3 | 06-03-2017 |
| | | | EP | 2677867 A1 | 01-01-2014 |
| | | | ES | 2616780 T3 | 14-06-2017 |
| | | | FR | 2971913 A1 | 31-08-2012 |
| | | | HK | 1186917 A1 | 28-03-2014 |
| | | | HR | P20170320 T1 | 19-05-2017 |
| | | | HU | E031968 T2 | 28-08-2017 |
| | | | LT | 2677867 T | 10-03-2017 |
| | | | PL | 2677867 T3 | 30-06-2017 |
| | | | PT | 2677867 T | 02-03-2017 |
| | | | RU | 2013143280 A | 27-03-2015 |
| | | | SM | T201700128 B | 08-03-2017 |
| | | | UA | 113164 C2 | 26-12-2016 |
| | | | US | 2013309336 A1 | 21-11-2013 |
| | | | WO | 2012114039 A1 | 30-08-2012 |
| WO 2015022033 | A1 | 19-02-2015 | DK | 3032947 T3 | 08-10-2018 |
| | | | EP | 3032947 A1 | 22-06-2016 |
| | | | ES | 2681028 T3 | 11-09-2018 |
| | | | PL | 3032947 T3 | 30-11-2018 |
| | | | WO | 2015022033 A1 | 19-02-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2002720 A

**Littérature non-brevet citée dans la description**

- Venno vet 1 is a desinfectant for all kind of animal houses for the responsible user. Menno Chemie-Vertrieb GmbH, 2003, 1-4
- Menno Hygienmanagement. Menno Chemie-Vertieb GmbH, 2015, 1-8
- **YILMAZ et al.** *Deutsche Tierärztliche Wochenschrift,* 2009, vol. 116 (5), 180-185